Europäisches Patentamt

European Patent Office

Office européen des brevets

(11) Publication number: **0 248 387**
**A2**

(12) # EUROPEAN PATENT APPLICATION

(21) Application number: 87107913.3

(51) Int. Cl.³: **B 60 C 27/16**

(22) Date of filing: 02.06.87

(30) Priority: 23.06.86 JP 146567/86
08.08.86 JP 186497/86
28.11.86 JP 284036/86
30.06.86 JP 153598/86
02.06.86 JP 127457/86
11.07.86 JP 26780/86

(43) Date of publication of application:
09.12.87 Bulletin 87/50

(84) Designated Contracting States:
CH DE FR LI

(71) Applicant: Bridgestone Corporation
10-1, Kyobashi 1-Chome Chuo-Ku
Tokyo 104(JP)

(72) Inventor: Fukai, Toshio
161-27, Nase-cho Totsuka-ku
Yokohama-shi Kanagawa(JP)

(72) Inventor: Tsuchiya, Kazuo
61-8, Shinbashi-cho Totsuka-ku
Yokohama-shi Kanagawa(JP)

(72) Inventor: Kushige, Takakazu
150-7, Kashio-cho Totsuka-ku
Yokohama-shi Kanagawa(JP)

(72) Inventor: Takahashi, Kenji
81, Ueki
Kamakura-shi Kanagawa(JP)

(72) Inventor: Aramaki, Kuninori
2034, Kamikurata-cho Totsuka-ku
Yokohama-shi Kanagawa(JP)

(72) Inventor: Simokawa, Yoshinori
2167-75, Kamisato-cho Totsuka-ku
Yokohama-shi Kanagawa(JP)

(72) Inventor: Ichikawa, Tadao
5-9-33, Mori Isogo-ku
Yokohama-shi Kanagawa(JP)

(74) Representative: Dreiss, Hosenthien & Fuhlendorf
Gerokstrasse 6
D-7000 Stuttgart 1(DE)

(54) Device for preventing tire skidding.

(57) A device for preventing tire skidding is disclosed. The device includes a multiplicity of frame portions which are continuously formed in a net-like shape. The respective frame portions are integrally connected by thin-walled portions, and constitute in combination the body of the device which acts to prevent tire skidding. Accordingly, it is possible to improve the rigidity of the frame portion with respect to twisting, thereby reducing the twist angle of the body.

./...

Croydon Printing Company Ltd.

FIG. 2

TITLE OF THE INVENTION

DEVICE FOR PREVENTING TIRE SKIDDING

BACKGROUND OF THE INVENTION

FIELD OF THE INVENTION

The present invention relates to a skid preventing device which is fitted over the tire of a vehicle in order to prevent the tire from skidding while the vehicle is in motion.

DESCRIPTION OF THE PRIOR ART

In general, a metal chain of the type that can be attached to the outer periphery of a tire is known as a device for preventing skidding for use on vehicles, typically during a snowfall or the like. However, the task of attaching such a metal chain is awkward, and a loud noise may be produced when the vehicle moves. In addition, such metal chains are inferior in terms of durability and involve the undesirable tendency to hit against and scratch the body of the vehicle when in motion.

For these reasons, a skid preventing device made of urethane elastomer or the like was proposed in the specification of Japanese Utility Model Laid-open No. 8483/1979. In addition, in order to reduce the level of vibration occurring during movement of a vehicle, proposals have been made with respect to a skid preventing device of the type in which rubber is disposed in the form of a net.

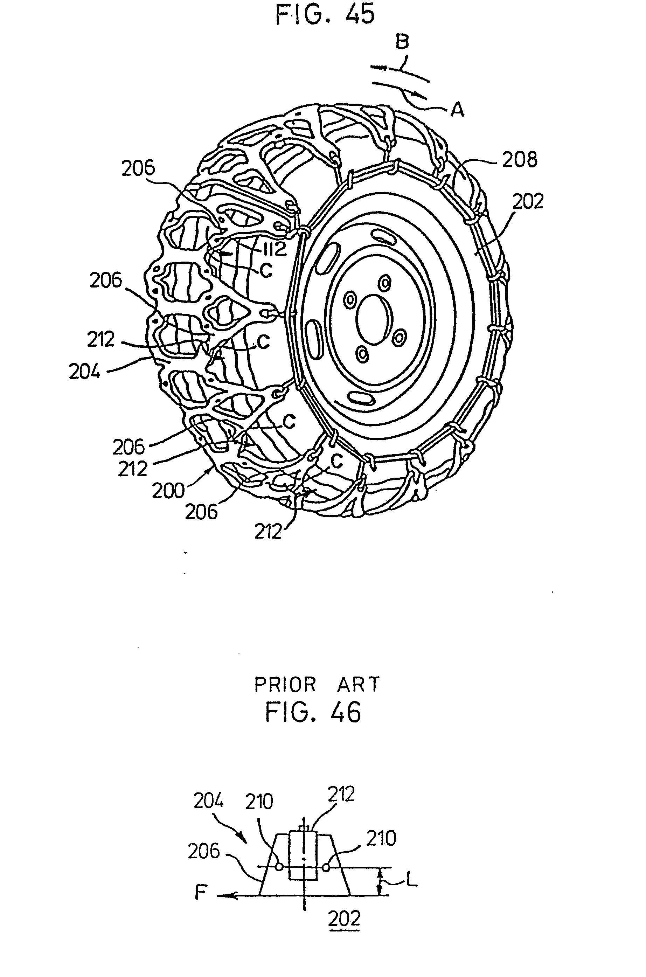

However, such a net-shaped skid preventing device involves the disadvantage of easily being twisted in the vicinity of the shoulder portions of tires. More specifically, as shown in Fig. 45, when a tire 202 is being rotated in the direction indicated by an arrow A, a skid preventing device 200 having spikes 212 is made to travel in the direction of an arrow B, that is, opposite to the direction of the arrow A, by a very small amount equivalent to the difference between the circumferences of the device 200 and the tire 202.

Therefore, frame portions 206 on the leading side of a body 204 of the skid preventing device 200 function as the tension side and this acts to pull rubber bands 208 or the like which are members for attaching the body 204 to the tire 202. In consequence, as shown in Fig. 46, frictional force F is produced between the frame portion 206 and the tire 202, thereby producing a twisting moment FL which is equivalent to the product of the frictional force F and a distance L between the surface of the frame portion 206 which is brought into contact with the tire 202 and reinforcement cords 210 disposed in the frame portion 206 for supporting a tensile load. Thus, twists occur in the respective frame portions 206 as indicated by arrows C in Fig. 45.

In consequence of the occurrence of twists in the frame portions 206, the leading ends of the latter get caught in grooves of a tire tread and becomes jammed therein, and in this state the skid preventing device 200 is brought into contact with the road surface or the like. This may cause partial friction or the like to take place on the frame portions 206, thus resulting in the risk of the durability deteriorating.

SUMMARY OF THE INVENTION

It is therefore an object of the present invention to provide a skid preventing device having frame portions which do not substantially get caught in the grooves of a tire tread.

This is achieved by a skid preventing device of the invention which is formed in the shape of a net by a multiplicity of continuous frame portions, characterized in that the respective frame portions are integrally connected by thin-walled portions.

In consequence, in accordance with the present invention, the rigidity of the frame portions with respect to twisting is so enhanced as to reduce the angles of twist, thereby substantially preventing the frame portions from getting caught in the grooves of the tire tread.

BRIEF DESCRIPTION OF THE DRAWINGS

Fig. 1 is a diagrammatic, top plan view of a first preferred embodiment of a skid preventing device in accordance with the present invention, in which the device is illustrated in partially omitted form for the sake of simplicity;

Fig. 2 is a perspective view of the essential portion of the skid preventing device shown in Fig. 1;

Fig. 3 is a diagrammatic, plan view of a portion of a wire which is disposed in the interior of the device shown in Fig. 1;

Fig. 4 is a sectional view taken along the line IV - IV of Fig. 1;

Fig. 5 is a sectional view taken along the line V - V of Fig. 1;

Fig. 6 is a perspective view of the device shown in Fig. 1 which is attached to a tire;

Fig. 7 is a perspective view of a hook used in the device shown in Fig. 1;

Fig. 8 is a side sectional view used as an aid in explaining the function of the device shown in Fig. 1;

Fig. 9 is a perspective view of the device shown in Fig. 1 which is attached to a tire, but showing the reverse side of the tire shown in Fig. 6;

Fig. 10A is a perspective view of a fitting used in the device shown in Fig. 1;

Fig. 10B is a top plan view of the fitting shown in Fig. 10A;

Fig. 10C is a side view of the fitting shown in Fig.

10A;

Fig. 10D is a bottom view of the fitting shown in Fig. 10A;

Fig. 11 is a diagrammatic, top plan view of a second preferred embodiment of a skid preventing device in accordance with the present invention, in which the device is illustrated in partially omitted form for the sake of simplicity;

Fig. 12 is a sectional view taken along the line XII - XII of Fig. 11;

Fig. 13 is a top plan view of a third preferred embodiment of the present invention;

Fig. 14 is a sectional view taken along the line XIV - XIV of Fig. 13;

Fig. 15 is a top plan view of a fourth preferred embodiment of the present invention;

Fig. 16 is a diagrammatic, top plan view of a fifth preferred embodiment of a skid preventing device in accordance with the present invention;

Fig. 17 is a perspective view of the essential portion of the skid preventing device shown in Fig. 16;

Fig. 18 is a sectional view taken along the line XVIII - XVIII of Fig. 16;

Fig. 19 is a top plan view of the portion shown in Fig. 18;

Fig. 20 is a perspective view of the part of the frame portion to which a metal member is attached in accordance with the present invention;

Fig. 21 is a sectional view taken along the line XXI - XXI, showing a recess formed in a metal member used in the invention;

Fig. 22 is a sectional view similar to Fig. 18 but showing a metal member and a chip which are used in a sixth preferred embodiment of the invention;

Fig. 23 is a top plan view of the metal member and the chip shown in Fig. 22;

Fig. 24 is a sectional view similar to Fig. 18 but showing a metal member and a chip which are used in a seventh preferred embodiment of the invention;

Fig. 25 is a top plan view of the metal member and the chip shown in Fig. 24;

Fig. 26 is a sectional view similar to Fig. 18 but showing a metal member and chips which are used in an eighth preferred embodiment of the invention;

Fig. 27 is a perspective view similar to Fig. 17 but showing a portion of a ninth preferred embodiment of the invention;

Fig. 28 is a top plan view of a portion of the embodiment shown in Fig. 27 to which no metal member is attached;

Fig. 29 is a sectional view taken along the line IXXX - IXXX of Fig. 27;

Fig. 30 is a perspective view of the portion shown in Fig. 28;

Fig. 31 is a sectional view similar to Fig. 18 but showing the essential portion of a tenth preferred embodiment of the invention;

Fig. 32 is a sectional view similar to Fig. 20 but showing the essential portion of an eleventh preferred embodiment of the invention;

Fig. 33 is a sectional view similar to Fig. 18 but showing the essential portion of a twelfth preferred embodiment of the invention;

Fig. 34 is a front elevational view showing a metal member and chips which are used in a thirteenth preferred embodiment of the invention;

Fig. 35 is a sectional view taken along the line XXXV - XXXV of Fig. 34;

Fig. 36 is a sectional view similar to Fig. 35 but showing a modification of the thirteenth preferred embodiment;

Fig. 37 is a front elevational view showing a metal member and chips which are used in a fourteenth preferred embodiment of the invention;

Fig. 38 is a top plan view of the member and the chips shown in Fig. 37;

Fig. 39 is a sectional view taken along the line IXXX - IXXX of Fig. 37;

Fig. 40 is a sectional view similar to Fig. 39 but showing a metal member and a chip which are used in a fifteenth preferred embodiment of the invention;

Fig. 41 is a front elevational view of a metal member and chips which are used in a sixteenth preferred embodiment of the invention;

Fig. 42 is a sectional view taken along the line XXXXII - XXXXII of Fig. 15 but showing a seventeenth preferred embodiment of the invention;

Fig. 43 is a diagrammatic, plan view of a portion of a reinforcement material which is disposed in the interior of the skid preventing device of the invention;

Fig. 44 is an exploded view used as an aid in explaining the procedures for producing the skid preventing device of the invention;

Fig. 45 is a perspective view of a skid preventing device to which the present invention is not applied and showing a manner in which the device is attached to a tire; and

Fig. 46 is a sectional view of a portion of the device shown in Fig. 45.

DESCRIPTION OF THE PREFERRED EMBODIMENTS

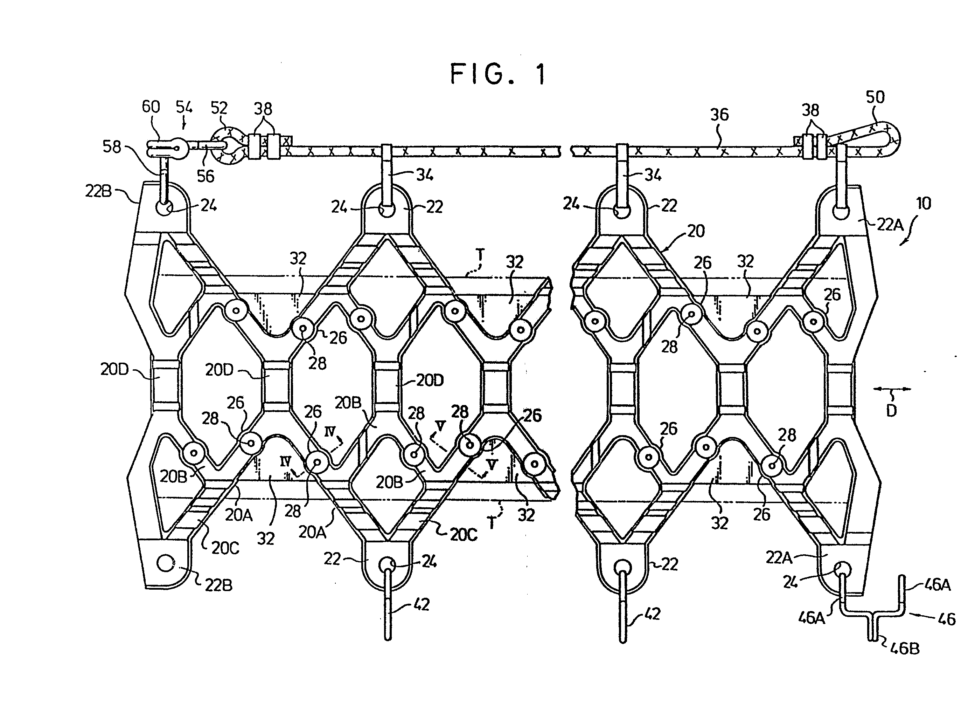

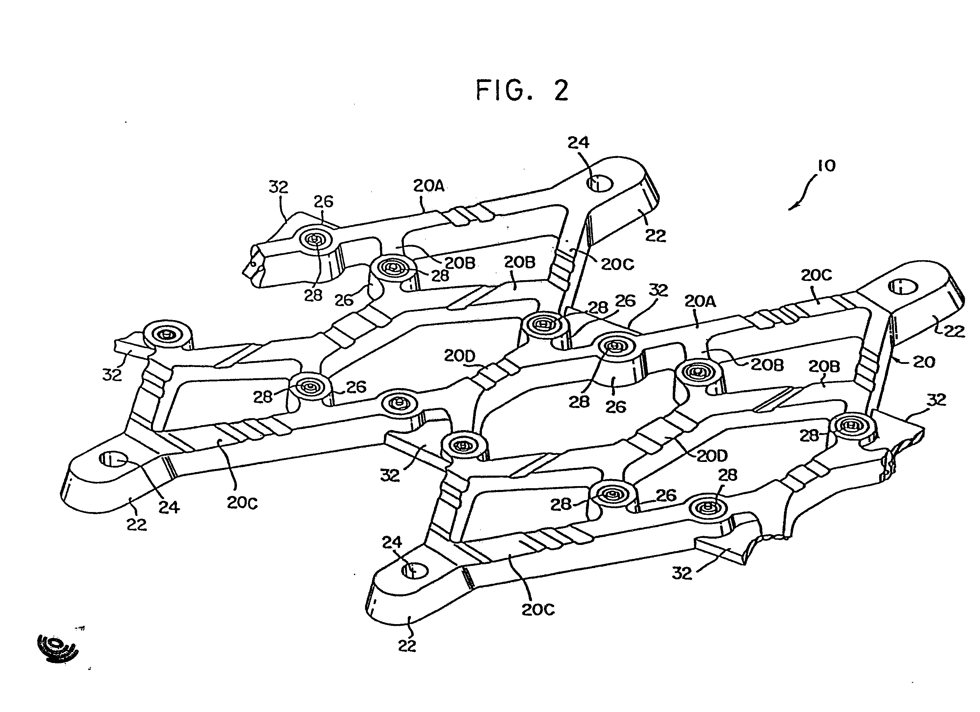

Figs. 1 and 2 respectively show a first preferred embodiment of a skid preventing device in accordance with the present invention, in which the skid preventing device is indicated generally at 10.

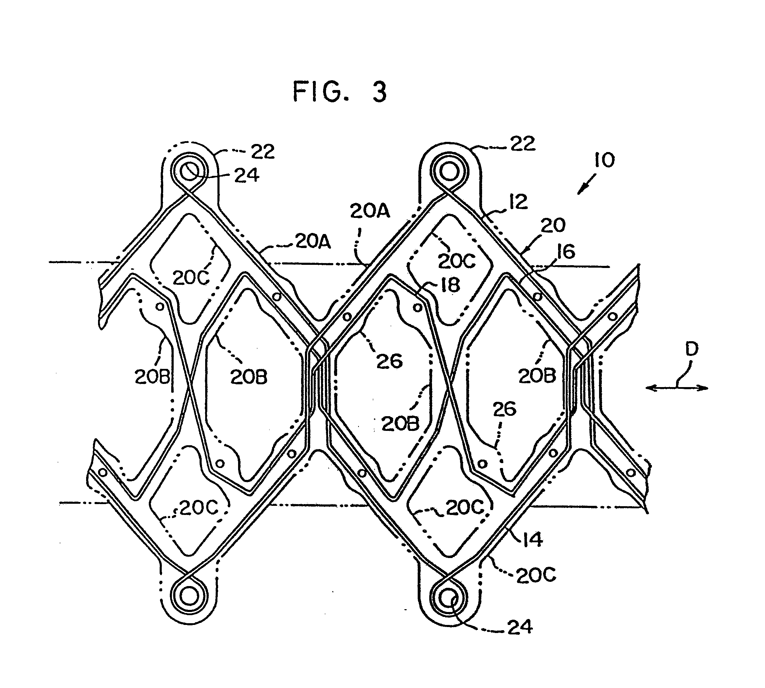

As shown in Fig. 3, the skid preventing device 10 has a body 20 in which outside frame forming reinforcement cords 12 and 14 and small frame forming reinforcement cords 16 and 18 are incorporated in such a manner so as be sealed from the exterior, the cords 12, 14, 16 and 18 being covered with rubber. These reinforcement cords may be made of metal or a synthetic resin such as nylon, tetorone or the like.

The body 20 is formed in the shape of a net which is continuously formed in the directions indicated by a double-headed arrow D, and is adapted to fit over a tire (not shown). Rubber projections 22 extend from the respective lateral ends of the body 20 in the direction perpendicular to that of the arrow D, and mounting holes 24 are respectively formed in the projections 22.

The arrangement and shape of the reinforcement cords used in the first embodiment will be described below. The outside-frame forming reinforcement cords 12 and 14 are disposed only in outside frame portions 20A of the body 20, and are respectively arranged in a continuous pattern and in the form of a sine curve. The respective cords 12 and 14 are passed around the mounting holes 24 at the maximum amplitude

-9-

portions of the sine curve. While the skid preventing device 10 is being molded, pins are projected from molding dies into the mounting holes 24 (not shown). It is therefore easy to incorporate the outside frame forming reinforcement cords 12 and 14 into the rubber by wrapping respective intermediate portions thereof around the pins in a loop-like manner. On the other hand, at the minimum amplitude portions of the sine curve, the cords 12 and 14 are arranged to intersect each other.

The respective outside frame portions 20A include a pair of first small frame portions 20B each having a net-like shape analogous to but smaller in size than the outside frame portion 20A, the first small frame portions 20B being formed to overlap the outside frame portion 20A and include the small frame forming reinforcement cords 16 and 18. In a manner similar to the outside frame forming reinforcement cords 12 and 14, these small frame forming reinforcement cords 16 and 18 are also disposed in the body 20 in the shape of a sine curve. However, the amplitude of the since curves of the cords 12 and 14 is smaller than that of the outside frame forming reinforcement cords 12 and 14 and the cycle of sine curve of the former is approximately half of that of the latter.

Therefore, the small frame forming reinforcement cords 16 and 18 are formed such as to intersect each other at the respective intersections of the outside frame forming reinforcement cords 12 and 14 and at intermediate points therebetween.

Accordingly, the small frame portions 20B form a pair of small frame portions in each of the outside frame portions 20A, and second small frame portions 20C with a rhombic shape are formed in the remaining portion of the body 20 which contains no first small frame portions 20B. The second small frame portions 20C are respectively so formed as to overlap the first small frame portions 20B at one portion thereof and the outside frame portion 20A at the other portion thereof. Incidentally, a detailed description will be made with respect to a preferable method of manufacturing the skid preventing device in which such reinforcement cords are disposed.

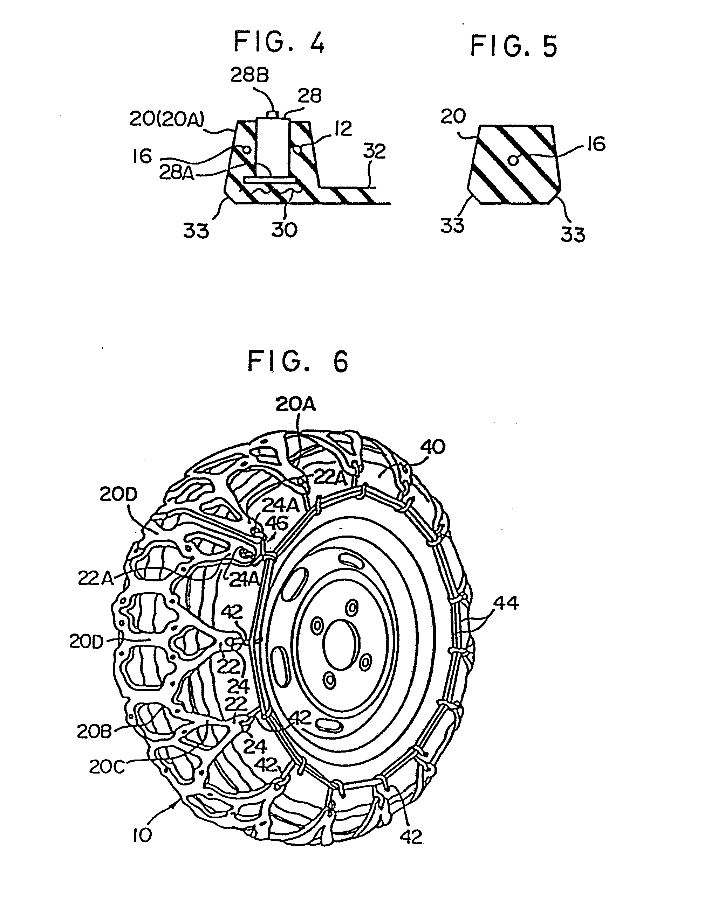

Enlarged portions 26 are formed at portions of the body 20, and a spike 28 is embedded in each of the enlarged portions 26. As shown in Fig. 4, each of the spikes has a flange 28A and a piece of canvas 30 underlies the flange 28A in a sealed manner, thereby preventing the spike 28 from coming off in the direction opposite to the surface of a road.

Since the spikes 28 are respectively attached to the body in this manner, when a vehicle moves on a dry road surface, the spikes 28 are pushed downwards as viewed in Fig.

4 and thus pins 28B projecting from one end of the respective spikes 28 are retracted. In this case, a bottom rubber surface corresponding to the spike 28 is swelled toward the tire (not shown). When the vehicle moves on snow, the pins 28B are maintained in its molded state, that is, in a state wherein they are projected into the snow.

Accordingly, this arrangement eliminates the problems of spikes damaging a dry road surface and dust being produced.

It is to be noted that, in order to improve the ability of gripping the ground during movement of a vehicle, it is also possible to employ parts which differ in structure from the spikes used in the first embodiment. A preferred example of such parts will be described later.

The body has thin-walled portions 32 for connecting the respective outside frames 20A which are arranged adjacent each other in the directions indicated by the double-headed arrow D in Fig. 1. As shown in Fig. 4, each of the thin-walled portions 32 has a thickness thinner than the body 20 but uniform over its entirety, and the respective outside edges thereof project outwardly from the position of the enlarged portions 26 which are formed in spaced-apart relationship in the direction normal to the arrow D shown in Fig. 1. The back of each of the thin-walled portions 32 which comes into contact with the tire, as shown in Fig. 4, is flush with that of the corresponding outside frame portion 20A. The canvas 30 shown in Fig. 4 may be extended into the thin-walled portion 21, or a reinforcement cord may be buried therein in a manner similar to the other portion of the body 20.

In addition, it is preferred that, as illustrated representatively in Figs. 4 and 5, chamfers 33 are formed at each edge of the back of the body 20 which comes into contact with the tire except for the portions of the body 20 connected to the thin-walled portions 32.

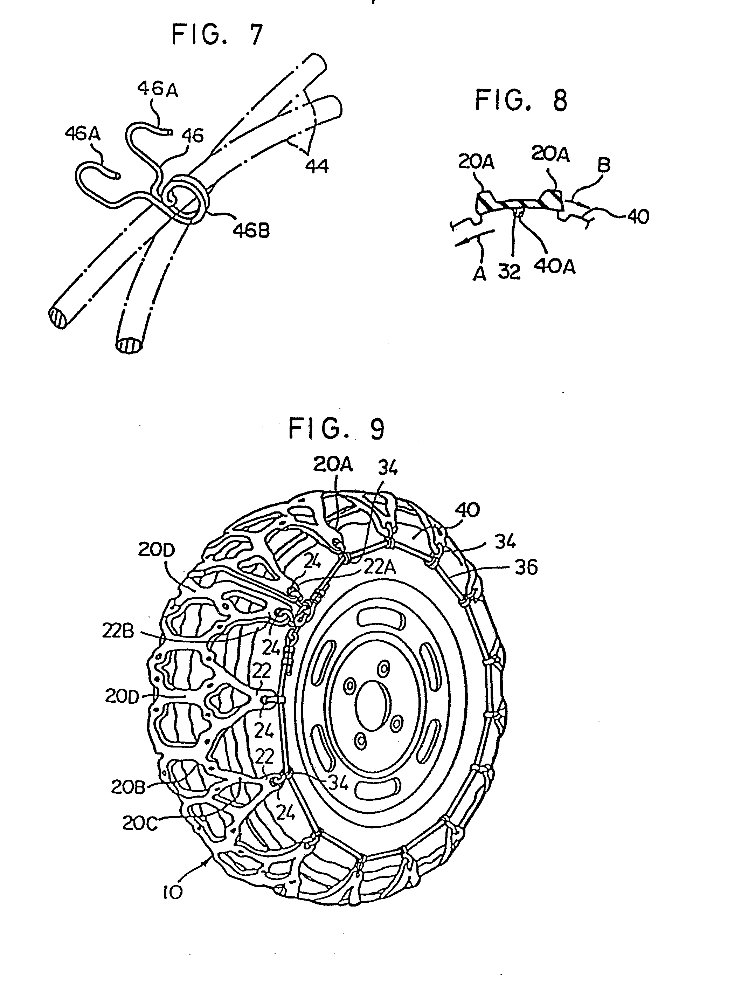

As shown in Fig. 9, the projections 22 formed on one side of the body 20 are disposed on the side of a tire 40 nearer the interior of a vehicle, that is, the side of the tire opposite to the side on which an operator attaches the skid preventing device 10 to the tire 40. Therefore, a rope 36 is attached to these projections 22 by means of hooks 34. The rope 36 is made of a material which shows a small percentage of elongation, and the rope 36 has a predetermined length required to attach the skid preventing device 10 to the outer periphery as shown in Fig. 9.

The core material of the rope 36 may be selected from the group consisting of uretane, thermoplastic resin (TPR), and synthetic fibers such as tetorone and nylon. The rope 36 preferably has a structure in which a resilent loop of such core material is covered with resilient elastomer such as rubber. In the prior art employing a braid, the rope 30 may

-13-

be hardened by the congelation of water absorbed by the same, or fittings such as the hooks 34 may imperfectly grip the rope when they are caulked. However, the aforesaid structure of the embodiment succeeds in solving these problems. The braid may be worn and fluffed during the usage thereof, and thus there is a tendency for the braid to absorbe muddy water. The aforesaid embodiment is also capable of eliminating this problem.

As shown in Fig. 1, opposite ends of the rope 36 are formed into loop portions 50 and 52 by means of caulking fittings 38. The loop portion 50 is attached to the hook 34 of a projection 22A formed at one longitudinal end of the skid preventing device 10. The loop portion 52 is disposed in the vicinity of a projection 22B formed at the other longitudinal end of the skid preventing device 10.

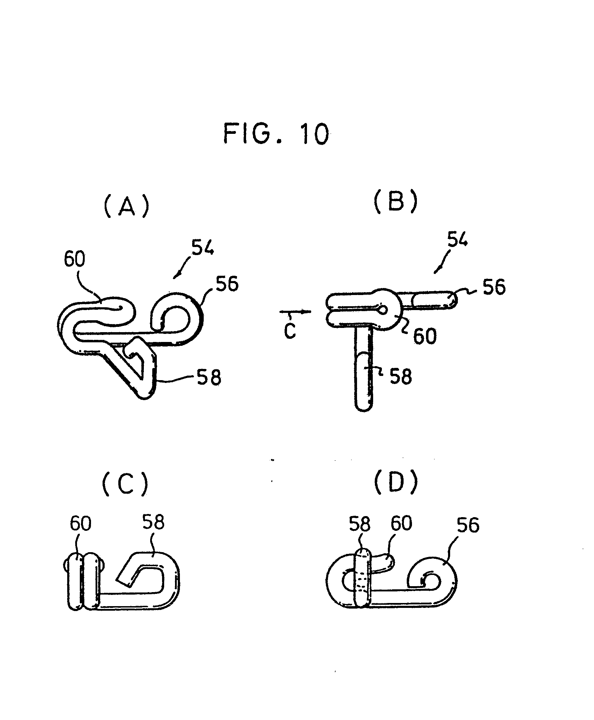

A fitting 54 is attached to the loop portion 52. The fitting 54 is shaped as shown in Figs. 10A to 10D. More specifically, one end of the fitting 54 is formed into a hook 56 which is bent in the shape of a loop while the other end thereof is formed into a hook 58 which project at right angles with the hook 56. The intermediate portion of the fitting 54 is formed into a hook 60 which is doubly bent in opposition to the hook 56. The bent portion which forms the hook 60 is made larger in width than the remaining portion of the fitting 54 for the purpose of preventing the rope from

-14-

coming off.

This fitting 54 is inserted at the hook 56 into the loop portion 52 and is caulked and attached to the rope 36. The hook 58 of the fitting 54 is caulked and attached to the projection 22B. The hook 60 is engaged with the loop portion 50.

As shown in Fig. 6, hooks 42 are attached to the mounting holes 24 formed in the projections 22 which are disposed on the side of the tire 40 exposed to the exterior of a vehicle. Each of the hooks 42 has one hooked portion which is engaged with the projection 22 and the other hooked portion which holds intermediate portions of rubber bands 44. It is preferable to in advance engage the hooks 42 with the corresponding mounting holes 24 so that they may not come off the holes 24. The rubber bands 44 may be made of any material other than expandable rubber. For example, it is possible to use a rope having non-linear tensile characteristics, such as a braided rope in which a rubber core is covered with an outer layer made of knitted yarn. The outer layer is preferably covered with rubber, thermosetting plastic or flexible plastic.

A hook 46 is engaged with the rubber projections 22A and 22B of the projections 22, the projections 22A and 22B being formed at the longitudinal ends of the body 20 (as viewed in the direction of the arrow D of Fig. 1.)

As shown in Fig. 7, the hook 46 has a pair of hooked portions 46A which are engaged with the respective mounting holes 24 of the rubber projections 22A and 22B, and the base of the hook 46 is formed into a loop portion 46B which is caulked so as to grip a plurality of rubber bands 44 by means of an adhesive or the like. Therefore, use of the hook 46 bundling the rubber bands 44 eliminates any likelihood of the rope being separated from each other and being lost during storage.

Since the tension of each of these rubber bands 44 is small, they can be easily engaged with the hook 42 one by one. However, when a plurality of the rubber bands 44 are engaged with the hooks 42, they in combination impart a large tension to the hooks 42 and positively hold the body 20 against the outer periphery of the tire 40 in opposition to centrifugal force or the like.

It is to be noted that, the number of the rubber bands 44 employed is not limited to two illustrated in the drawings, and, of course, three or more may used. Instead of a plurality of the rubber bands 44, a loop-shaped rubber band having a long axial length may be used in a triple annular form.

Reference sign T shown in Fig. 1 represents a line along which the body 20 corresponds to the shoulder portions of a tire when the body is to be attached to the tire.

Since the outside frame portions 20A and the first small frame portions 20B are formed in a net-like shape, a suitable level of tension is applied as a mounting force to the respective mounting holes 24. Accordingly, the skid preventing device 10 is positively and intimately attached to the outer periphery of the tire.

The operation of the first preferred embodiment will be described below.

When the skid preventing device 10 is to be attached to the tire 40, one breadthwise side of the device 10, as shown in Fig. 9, is disposed on the inner side of the tire 40, that is, on the side thereof nearer an axle to which the tire 40 is attached, and the longitudinal ends of the skid preventing device 10 are connected by the fitting 54.

This connection is carried out by inserting the hook 60 of the fitting 54 into the loop portion 50. Unlike the prior art, since all that are required in this case is to insert the hook 60 into the loop portion 50, the operation is simple.

On the outer side of the tire 40, as shown in Fig. 6, the hooked portion 46A of the hook 46 is inserted into the mounting hole 24A formed at the longitudinal ends of the body 20 and the intermediate portion of the bands 44 is caught on on the hooks 42.

In the presently preferred embodiment of the skid

-17-

preventing device 10, the surface of the body 20 facing a road surface and the respective projections of the spikes 28 come into contact with the ground during movement of a vehicle, thereby preventing the tires from skidding. In particular, ladder portions 20D which are formed normal to the direction of movement are effective in an improvement in climbing ability and braking effect. Since the body 20 is formed by a combination of large and small net-shaped sections, no great difference in level occurs throughout the outer periphery of the tire and this results in a reduction in vibration when the vehicle is in motion.

As previously explained in the description of the prior art, a relative movement is produced between the skid preventing device 10 and the tire 40, thereby producing a twisting moment around the location of the spike 28 which is producing the largest frictional force with respect to the surface of a road. However, since the rigidity of such location with respect to twisting is enhanced by the thin-walled portion 32, the twist angle is made extremely small. In addition, as soon as the outside frame portion 20A is twisted, it is pulled by the resilient force of the associated thin-walled portion 32, thereby recovering from the twisted state. This prevents the outside frame portion 20A from getting caught in the grooves of a tire tread.

In particular, in the first preferred embodiment, as

-18-

shown in Fig. 8, the thin-walled portion 32 extends in a direction B of a relative movement with respect to the tire 40 from the outside frame portion 20A on the leading side (on the left side in Fig. 8) which is viewed in the direction B of the relative movement, the portion 20A being most likely to get caught in the grooves of the tire tread. Accordingly, as is evident from Fig. 8, there is no risk of the outside frame portion 20A getting caught in a groove 40A of the tread of the tire 40.

The chamfers 33 are preferably formed at the portions of the body 20 which correspond to the intermediate portion of the width of the tire tread and on which on which the aforesaid effect of the thin-walled portions 32 is not easily exercised, thereby preventing the body 20 from getting caught in the grooves of the tire tread. Since these portions of the body 20 originally has relatively high rigidity with respect to twisting, a satisfactory effect can be produced only by forming the chamfers 33.

As shown, a plurality of spaces are defined by being surrounded by the outside frame portions 20A, the first small frame portions 20B and the second small frame portions 20C. The formation of the chamfers 33 progressively narrows the respective openings of the spaces at the chamfers 33 toward the surface of a road, and this enhances the capability of gripping the surface of snow. In consequence, since the chamfers 33 act to harden the snow under pressure, it is possible to improve the capability of gripping a road surface covered with so-called powder snow which does not easily become solid.

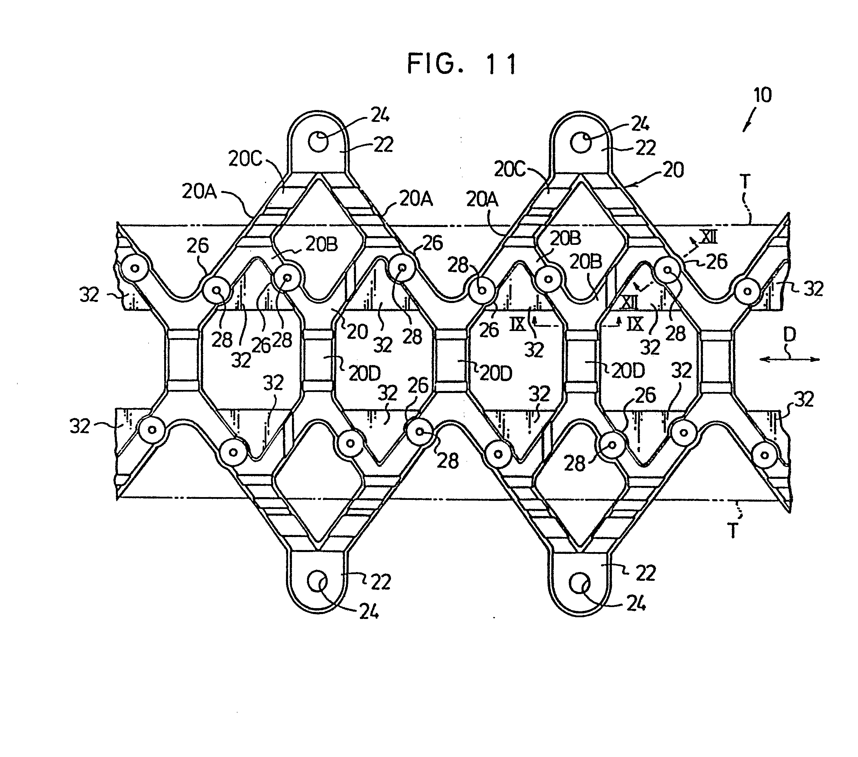

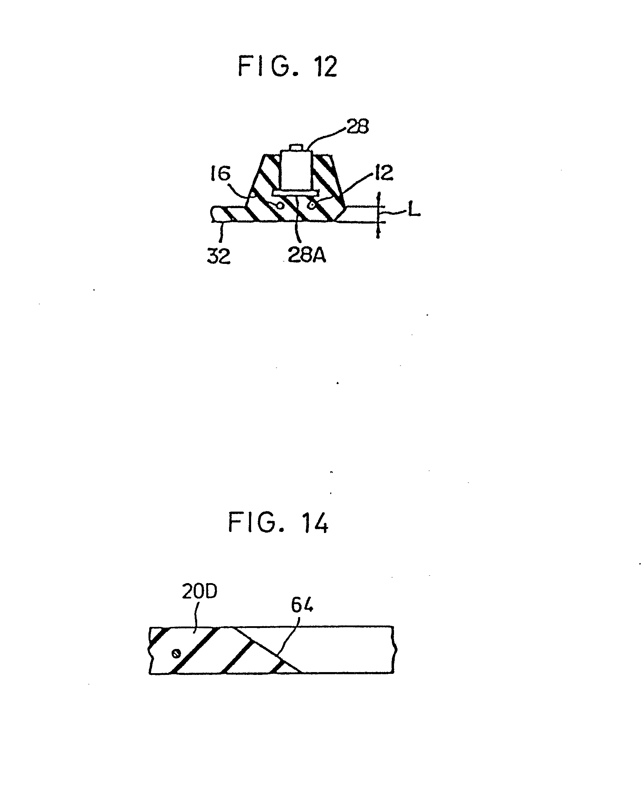

Figs. 11 and 12 respectively show a second preferred embodiment of the present invention. In this embodiment, the respective thin-walled portions 32 are so formed as to connect the outside frame portions 20A and the corresponding first small frame portions 20B. The reinforcement cords 12 and 16 are disposed under the respective flanges 28A of the spikes 28, and no canvas 30 used in the first embodiment underlies the flanges 28. The canvas 30 is used as biasing canvas acting in the directions indicated by the double-headed arrow D or may serve as a reinforcement cord, and thus can effectively prevent the breakage of the device 10 which might be caused while a vehicle is moving on a graveled road.

As in the case of the first embodiment, in the second embodiment as well, rigidity relative to twisting is improved by the provision of the thin-walled portions 32 and the formation of the chamfers 33 prevents the body from getting caught in the grooves of the tread of a tire.

In particular, in this second embodiment, since the reinforcement cords 12 and 16 are disposed under the respective spikes 28, the aforesaid twisting moment (F x L) during movement of a vehicle is reduced.

In the second embodiment as well, the respective projections 22 are attached to a tire via the rope 36 and the rubber bands 44 by means of the fitting 54 and the hooks 42 and 46.

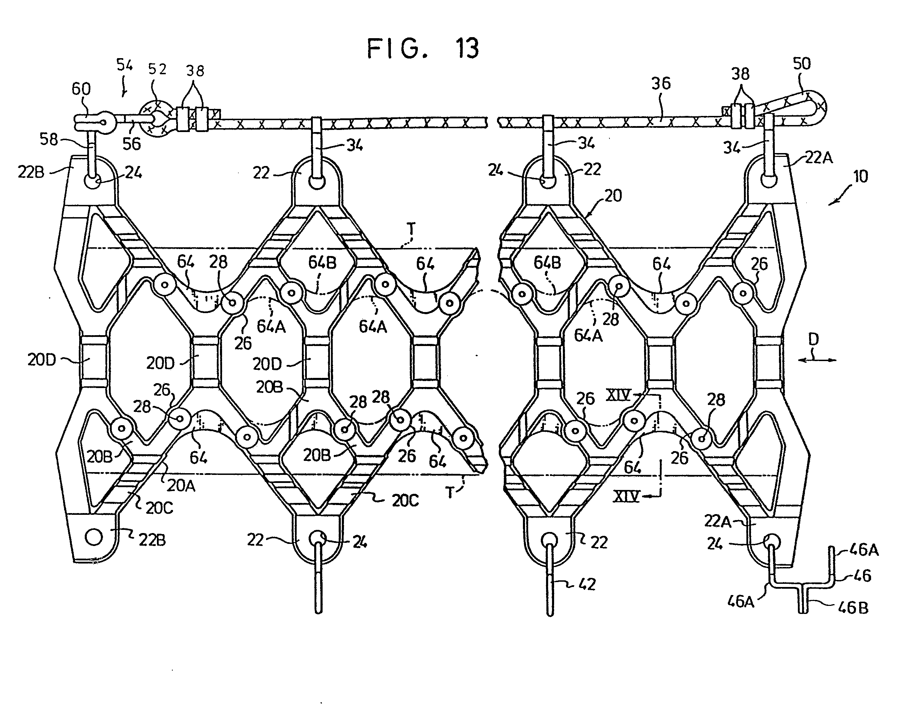

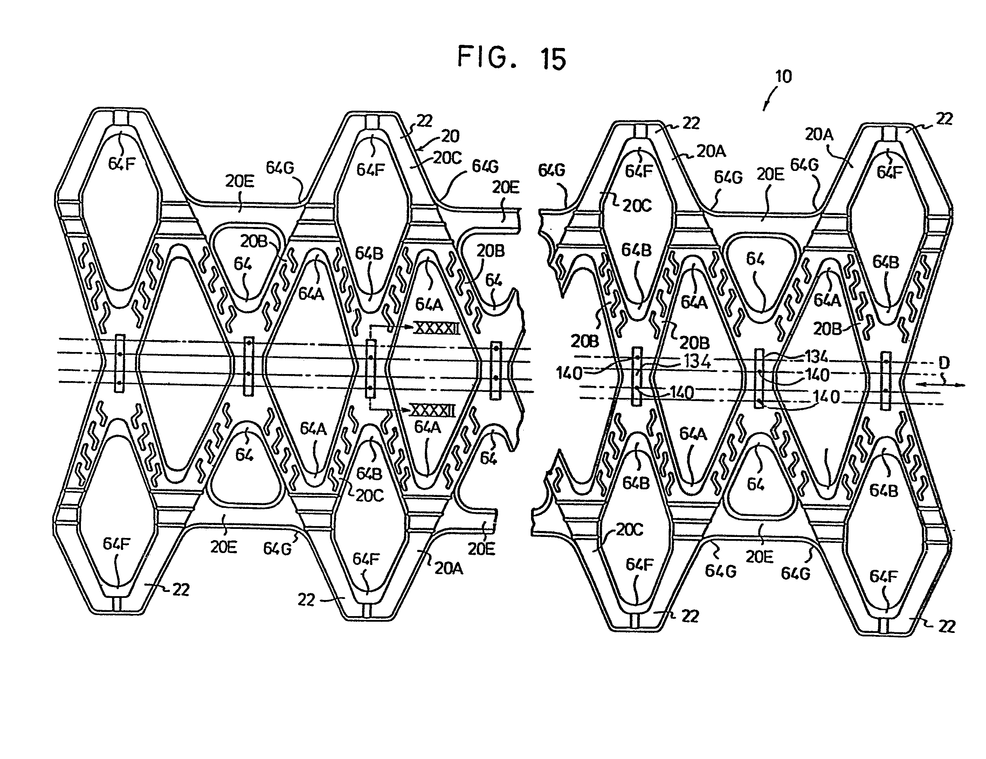

Figs. 13 and 14 respectively show the third preferred embodiment of the prevent invention. In the third preferred embodiment, each thin-walled portion 64 has a breadthwise edge with a circular shape as viewed in the direction of thickness of the skid preventing device 10 as shown in Fig. 13. As shown in Fig. 14, when viewed in the longitudinal direction of the skid preventing device 10, the thin-walled portion 64 has a slope along which the thickness thereof is progressively reduced.

Accordingly, in the third embodiment, it is possible to simplify the configuration of a mold used for forming the skid preventing device 10.

It is to be noted that the body 20 in the third embodiment is preferably formed so as to have a hardness of 60 - 70 degrees (Japanese Industrial Standard) which is slightly higher than the hardness of the aforesaid embodiments.

The respective thin-walled portions 64 in this embodiment connect the outside frame portions 20A which are disposed adjacent to each other in the direction of the circumference of a tire. However, as shown by an imaginary line in Fig. 13, thin-walled portions 64A may be so formed as to connect corner portions of the first small frame portions 20B, or thin-walled portions 64B may be so formed as to connect corner portions of the second small frame portions 20C.

Fig. 15 shows the fourth preferred embodiment of the prevent invention. This embodiment differs from the aforesaid embodiments in that all of the frame portions 20A, the first small frame portions 20B and the second small frame portions 20C are formed in a rhombic, small frame portions 20E being disposed so as to connect the respective outside frame portions 20A which are adjacent to each other. The axes of the small frame portions 20E are in parallel with the longitudinal axis of the body 20.

Referring to the shapes of the frames in this fourth embodiment, the respective small frame portions 20B have a substantially rhombic shape instead of the hexagonal shape shown in Fig. 1. Therefore, the reinforcement cords can be passed in a substantially linear manner between the opposite breadthwise ends of the skid preventing device 10. In consequence, as compared with the arrangement shown in Fig. 1, productivity is remarkably improved and the breadthwise elongation of the skid preventing device 10 is also reduced, and this reduces the degree of dislocation of the device 10 during movement of a vehicle.

Since the fourth embodiment has no mounting holes 24 that are used in the aforesaid respective embodiments, hooks are respectively directly engaged with the projections 22.

This embodiment also includes the thin-walled portions 64, 64A and 64B each having a slope similar to that of the third embodiment. In addition, thin-walled portions 64F and 64G may be formed at other corners of the body 10. It will be appreciated from the foregoing that, although the respective thin-walled portions are formed between different frame portions, for example, the frame portions 20A and 20B, it is also preferable to form thin-walled portions such as the portions 64F which connect certain portions of the frame portions, respectively. Furthermore, existence of the small frame portions 20E in the fourth embodiment increases the effect of preventing the occurrence of twists.

As described previously, the skid preventing device 10 shown in Figs. 1 to 13 employs the spikes 28 in order to improve contact with the ground. However, for the same purposes, metal members may be attached to parts of the frame portions in such a manner that the former are wrapped around the latter, the metal members being brought into contact with the ground. If the metal members are attached to certain intersections of the adjacent frame portions, they can also be used as reinforcement members.

-23-

Since such metal members are commonly caulked, it is necessary to produce them with a relatively soft material such as soft steel. It is a common practice to use soft steel having a hardness of about S 20 C, and thus there is no problem when a vehicle moves on a road covered with ice or snow. However, if the vehicle moves on a paved road from which snow is cleared away, the metal members are remarkably worn and the lift time thereof is shortened. For the purpose of a countermeasure, a portion of each of the metal members may be subjected to heat treatment so as to partially harden the metal members. However, if soft steel is partially hardened, the resultant hardness is limited, and accordingly, it is impossible to achieve a sufficient level of wear resistance.

If such metal members are utilized in the following manner, it is possible to reduce the degree of wear which might be caused during movement on a hard road surface, thereby prolonging the lift time.

More specifically, it is preferred that members for improving the capability of gripping a road are constituted by soft metal members which are so caulked as to fit on certain frame portions of the skid preventing device and contact tips secured to the side of each of the caulked members which come into contact with the ground.

In accordance with this arrangement, even if the metal

-24-

members to be fitted onto the frame portions is made of a soft material, the contact tips attached to the metal members can be formed of refractory metal or the like. Since this arrangement inhibits the occurrence of wear of the caulked metal members, the life time can be prolonged.

As an example, the contact tip may be soldered to the caulked metal member, and, if the tip is inserted in a recess which is formed in the caulked metal member, the mounting strength is increased.

In addition, if the caulked metal member is fitted on a recess formed around the frame portion, it is possible to firmly attach the former to the latter. Also, the caulked metal member may be disposed on the frame portion such that the metal member does not project toward a road surface from the level of the surface of the frame portion in contact with the road surface, and this could further positively prevent the wear of the caulked metal member. In this case, it is preferable to form a recess in the surface of the frame portion adjacent to the ground and the side surfaces thereof. The portion of the caulked metal member disposed in the recesses in the side surfaces is not substantially exposed from the surface of the frame portion, either, and this prevents the weary of this portion of the member as well.

When the aforesaid metal member comes into contact with the ground, it is subjected to a reaction force from the

-25-

surface of a road, and thus the breadthwise intermediate portion of the frame body is easily deflected to a great extent in the direction opposite to the road surface. As this deflection increases, the shoulder portions of the soft metal member which is attached to the frame portion may protrude toward the road surface, and could be brought into contact with and worn by the road surface. For this reason, when a plurality of contact chips are provided on the metal member, the chips are preferably formed such that they are located on the shoulders of the member when it is fitted on the frame portion.

The part of the frame portion to which the metal member is attached has a thin-walled intermediate portion which is defined between the opposite side surfaces of the frame portion. Therefore, even if the metal member comes into contact with the road surface, since the resultant reaction force increases at the intermediate portion, an intermediate portion of the metal member is not greatly deflected counter to the road surface. Thus, it is possible to avoid the wear of the shoulders which might be caused by the contact with the ground. In order to avoid the contact of the shoulders of the metal member with the ground, it is also preferred that the shoulder portions of the member which is fitted on the frame portion may be bent in accordance with a predetermined curvature or that the side of the metal member adjacent to the ground may be shaped so as to have high flexural rigidity. If the shoulders which are formed by bending the metal member inwardly from the side thereof facing the ground are formed in a thin-walled shape, it is possible to avoid the premature breakage of the shoulder portions.

Also, a pair of contact chips may be disposed on the metal member such that the distances from them to the ends of the member differ from each other in the direction of breadth of the tire, such metal members being arranged side by side in the direction of the circumference of the tire, and the contact chips which are adjacent to each other in the same direction being spaced apart in the direction of the breadth of the tire. In this arrangement, the contact chips as a whole are disposed in columns of four in the direction of the circumference of the tire, so that the capability of preventing skidding is improved.

The construction of the contact chips are not limited to metal soldered to the metal metal, and may be ceramics secured to the metal metal, for example, by flame spraying.

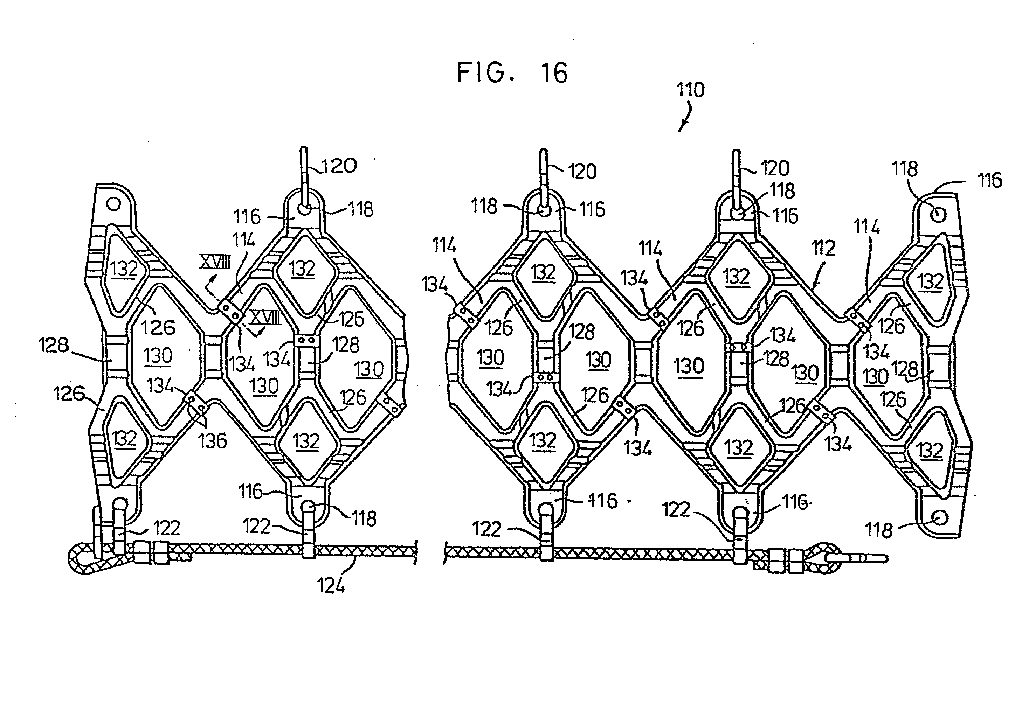

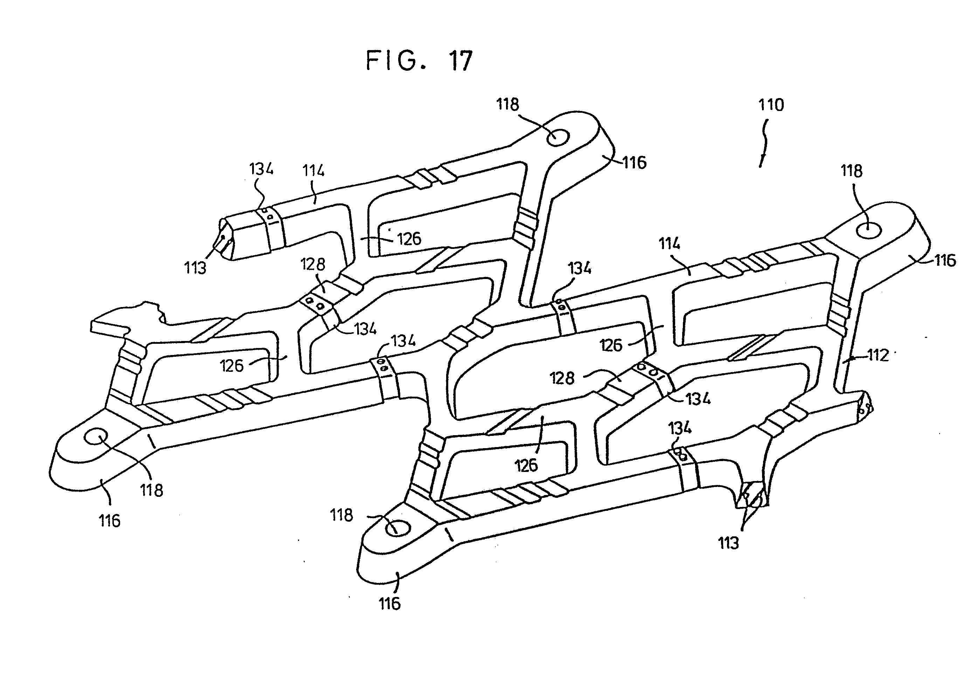

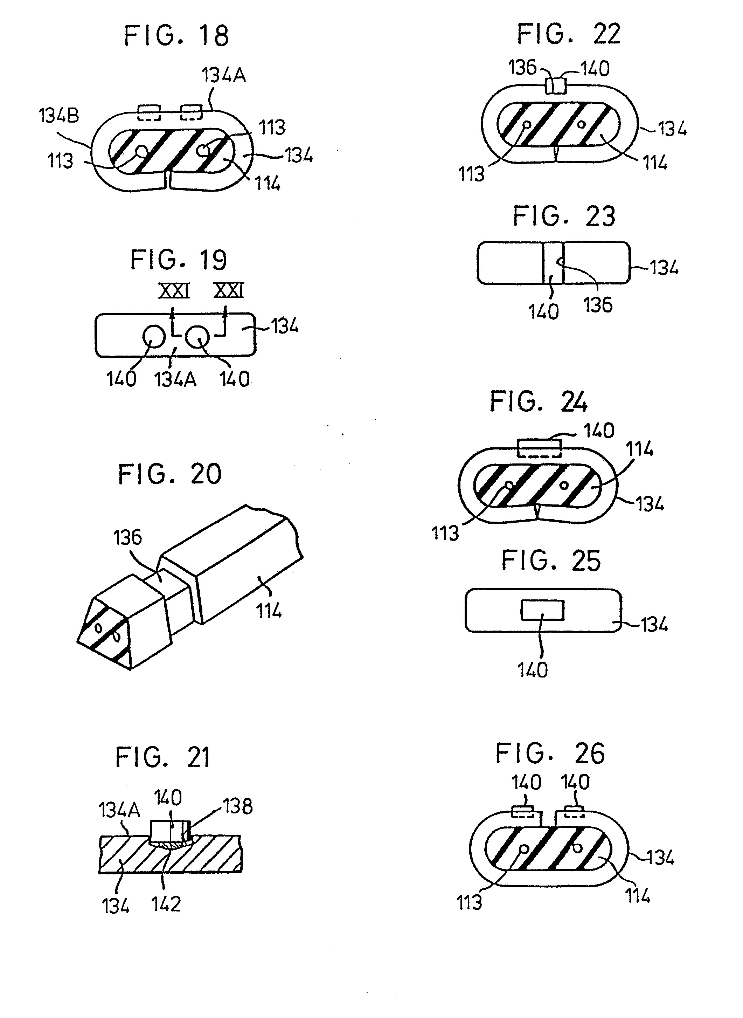

Figs. 16 and 17 respectively show a skid preventing device constituting a fifth preferred embodiment, the skid preventing device being indicated generally at 110. The skid preventing device 110 has a rubber-made body 112 which includes reinforcement materials 113 such as reinforcement wires or cords in an enclosing manner.  (Refer to Fig. 18.)

As shown in Fig. 17, the body 112 is constituted by a plurality of outside frame portions 114 each having a hexagonal shape in top plan view, one side of the respective portions 114 being integral with that of the adjacent portions 114.  Thus, the body 112 as a whole has an elongated shape.

The respective outside frame portions 114 with a hexagonal shape have apexes which are not integral with the adjacent frame portions 114, and a projection 116 is formed at each of the apexes.  The respective projections 116 have mounting holes 118 to which fittings 120 and 122 are attached.  A rubber band (not shown) is engaged with the fittings 120 so as to pull the body 112 toward the side of the axle to which a tire is attached while a rubber cord 124 is engaged with the fittings 122 with the opposite ends of the cord 124 connected to each other so as to pull the body 112 over the tire in the direction opposite to the axle. Thus, the body 112 is fitted over the tire.

Each of the outside frame portions 114 has V-shaped small frame portions 126, and both ends of the portions 126 are integral with the vicinity of the adjacent fitting 120 or 122.  In the respective outside frame portions 114, a small frame portion 128 connects these two small frame portions 126 at their respective central bends.

Therefore, the small frame portions 126 and 128 in combination define two hexagonal small aperture 130 and two rhombic small apertures 132 in the interior of the outside frame portion 114, the apertures 132 and 114 being formed through the body 112.

It is to be noted that reinforcement materials of the type which is buried in the outside frame portions 114 are embedded in the small frame portions 126 and 128.

Referring to Figs. 18 and 19, metal members 134 are attached to parts of the outside frames portions 114 in a fitted manner. The metal members 134 are respectively made of aluminum killed steel having a hardness of about S20C or S25C, and they are caulked in an elliptic shape and are fixedly fitted on the outside frame portions 114.

As shown in Fig. 20, the respective metal members 134 are attached to mounting portions, each of the mounting portions being constituted by a recess 136 formed at a certain position of each of the outside frame portions 114. The metal members 134 are respectively disposed in the recesses 136. Each of the recesses 136 is formed on the side of the outside frame portion 114 which comes into contact with the ground (on the upper sides of Figs. 17 and 18) as well as in the opposite side surfaces, but the side adjacent to the tire has no recess. However, the recesses 136 may be formed on the side of the outside frame portions 114 adjacent

-29-

to the tire.

Referring to Fig. 21, a side 134A of each of the metal members 134 which comes into contact with the ground is formed with a depression 138, and one end of a columnar contact chip 140 is inserted in the depression 138. The contact chip 140 and the depression 138 are joined with copper solder. The metal member 134 is placed in the recess 136, bent about the center the member 134 into an elliptical shape, and caulked so as to be fixed to the body 112.

When the skid preventing device 110 is attached to a tire, the reverse side of the device 110 (the non-visible side as viewed in Fig. 16) is applied to the outer periphery of the tire, and is engaged with the tire by means of the rubber rope 124 and a rubber band (not shown).

When a vehicle is in motion, the obverse side of the body 112 comes into contact with the ground, and the contact chips 140 projecting from the surface in contact with the ground improve the capability of gripping a road cover with ice or snow.

In a case where the vehicle moves on a paved road from which snow is cleared, the projecting ends of the contact chips 140 and the obverse side of the body 112 come into contact with the road but the metal members 134 do not substantially come into contact therewith. Accordingly, even if the metal members 134 are made of soft steel, the degree of wear thereof is reduced to the minimum extent.

The skid preventing device 110 constituting the fifth embodiment of the invention was experimentally used on a dry, paved road in a state wherein the contact chips 140 were projected 1 mm outwardly from the surface of the body 112. After 485 km had been travelled, no contact chips 140 were abraded but worn by 0.1 mm. On the other hand, when no contact chip 140 was used and the metal members 134 were attached to the body 112 containing no recess 136, the members 134 were previously abraded at the time that 70 km was travelled. In addition, the contact chips 140 made of a refractory metal WC-CO ($H_{RA}$ 86.5) and Cr-Mo ($H_{RC}$ 52), respectively, were subjected to abrasion tests using a grindstone ($A\ell_2O_3$, 24 mesh, grade P and texture 7V10W). It was observed that the wear resistance of WO-CO was thirty times as high as that of Cr-Mo.

Figs. 22 and 23 respectively show the metal member 134 and the contact chip 140 both of which are used in the sixth embodiment of the invention. The contact chips 140 used in this embodiment has a block-like shape, and is inserted in and soldered to the recess formed breadthwise in the metal member 134. Accordingly, it is possible to produce a firm grip on a road by attaching the chip 140 shown in this embodiment to each of the small frame portions 128 of the body 112 shown in Fig. 16.

-31-

In the seventh embodiment shown in Figs. 24 and 25, the contact chip 140 in the aforesaid sixed embodiment is fixedly disposed in the metal member 134 such that the length of the former corresponds to that of the latter. This embodiment is suitable for use in a case where the orientation of the metal members 134 is shifted through an angle of 90 degrees from that in the aforesaid sixth embodiment.

Referring to the eighth embodiment shown in Fig. 26, when the metal member 134 is so caulked as to surround the outside frame portion 114, the opposite ends of the former may face each other on the side of the body 112 which comes into contact with the ground instead of the tire. In this case, of course, the contact chips 140 are disposed in the vicinity of the opposite ends of the metal member 134.

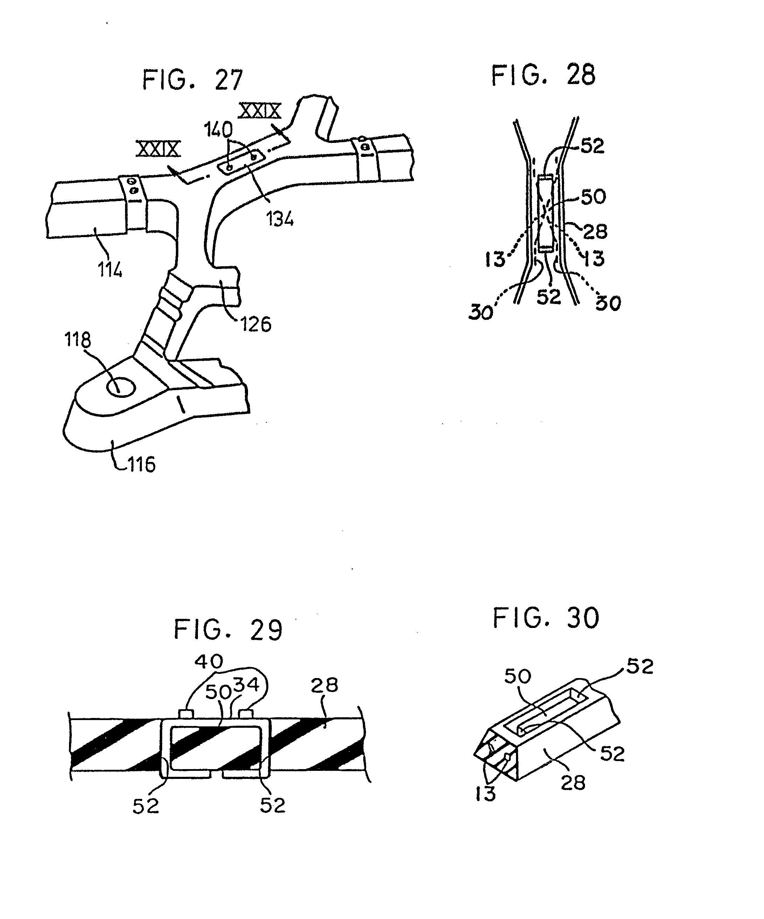

Figs. 27 to 30 shows the ninth preferred embodiment of the present invention. In this embodiment, the caulked metal member 134 is attached to each connecting portion which serves as a ladder portion of the outside frame portion 114 so as to provide connection between the adjacent outside frame portions 114.

Each of the outside frame portions 114 has a shallow groove 150, and the longitudinal ends of the shallow groove 150 has through holes 152 which are formed through the outside frame portion 114.

As shown in Fig. 29, the metal member 134 is inserted at its central portion in the sharrow groove 150 and at its opposite legs in the through holes 152, and in this state both ends of the member 134 are caulked. The contact chips 140 may be attached to the caulked metal member 134 in any of the manners described in the respective embodiments.

It is to be noted that, in the ninth embodiment, the reinforcement materials 130 are buried in the outside frame portions 114 as shown in Fig. 28. More specifically, the materials 130 intersect each other in an X-like manner at an intermediate position between a pair of the through holes 152, that is, between the opposite legs of the caulked metal member 134.

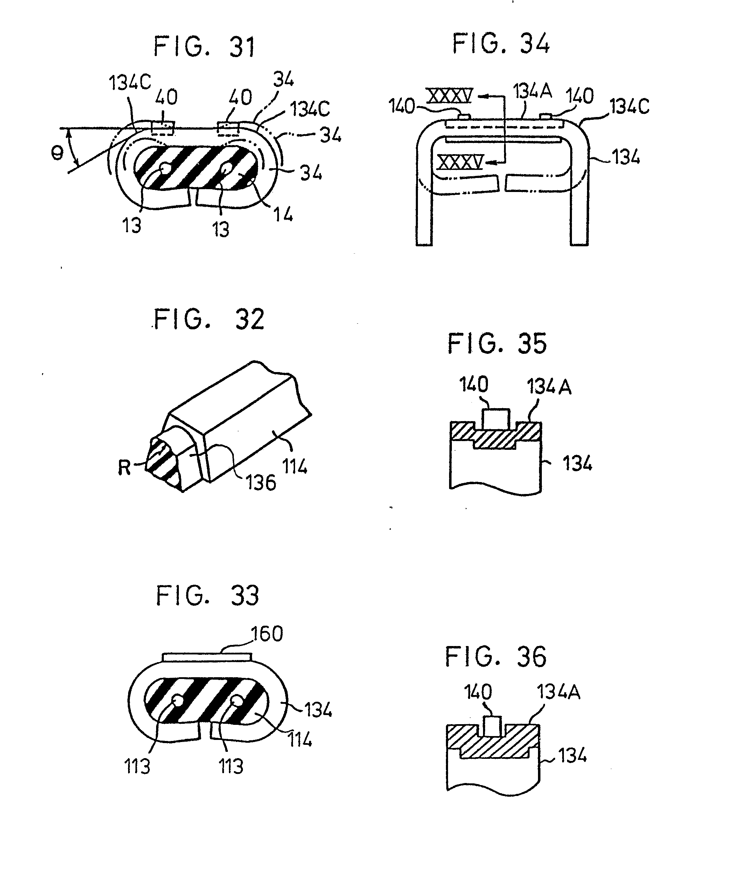

Fig. 31 shows the tenth preferred embodiment of the invention. In this embodiment, the paired contact chips 140 used in the fifth embodiment shown in Fig. 18 are attached to the metal member 134 such that they are spaced further apart. Therefore, in a case where the contact chips 140 undergo force generated by the contact with a road surface, an intermediate portion of the metal member 134 in the breadthwise direction of the outside frame portion 114 (in the left-hand or right-hand direction in Fig. 31) is not deflected counter to the road surface to a great extent. For this reason, since the shoulders 134C of the metal member 134 fitted on the outside frame portion 114 are not deformed as shown by imaginary lines in Fig. 31, there is no risk of the

-33-

shoulder 134C coming into contact with the road surface, and this eliminates the occurrence of abrasion or wear.

Also, in order to prevent the shoulders 134C of the metal member 134 from coming into contact with the road surface, the shoulders 134C may also be bent at an angle of θ as shown in Fig. 31 or in accordance with a predetermined curvature. As compared with a case where the shoulds 134C are bent at right angles, formation of such bending reduces the likelihood of contact with the road surface.

Fig. 32 shows the eleventh preferred embodiment of the present invention.

In the fifth embodiment shown in Fig. 20, a description was made with respect to the recess 136 formed in the outside frame portion 114. In the eleventh embodiment, the recess 136 is shallowed at its intermediate portion in the breadthwise direction of the outside frame portion 114. More specifically, the part of the outside frame portion 114 having the recess 136 is formed such that the thickness is progressively increased from the opposite sides to the central portion.

Accordingly, when the metal member 134 is attached, it undergoes a large reaction force at the central portion of the breadth of the outside frame portion 114 . In consequence, even when the metal member 134 is brought into contact with the road surface, the intermediate portion of

-34-

the member 134 is not deformed toward the interior of the the outside frame portion 114. This prevents the shoulders of the respective metal member 134 from projecting toward the surface of a road.

Fig. 33 shows the twelfth preferred embodiment of the present invention. This embodiment differs from the aforesaid respective embodiments in that a ceramic 160 is attached to each of the metal members 134. By way of example, the ceramic 160 is attached to the metal member 134 by flame spraying such that the length of the ceramic 160 is disposed in the breadthwise direction of the outside frame portion 114 (in the right-hand or left-hand direction in Fig. 33). Therefore, since the flexural rigidity of the metal member 134 is improved, the shoulders of the member 134 does not come into contact with the road surface.

Figs. 34 and 35 respectively show the thirteenth preferred embodiment of the present invention but illustrate the configuration of the metal member 134 which has not yet been attached to the body 112. In this embodiment, the metal member 134 is forged in such a manner that the side 134A thereof which comes into contact with the ground has an uneven sectional shape, thereby improving the flexural rigidity. Accordingly, since no intermediate portion of the metal member 134 between the paired contact chips 140 is excessively deflected counter to the road surface, there is no risk of the shoulders 134C coming into contact with the road surface. It is thus possible to prevent the metal member 134 from being worn.

It is to be noted that the aforesaid uneven sectional shape may be as shown in Fig. 36.

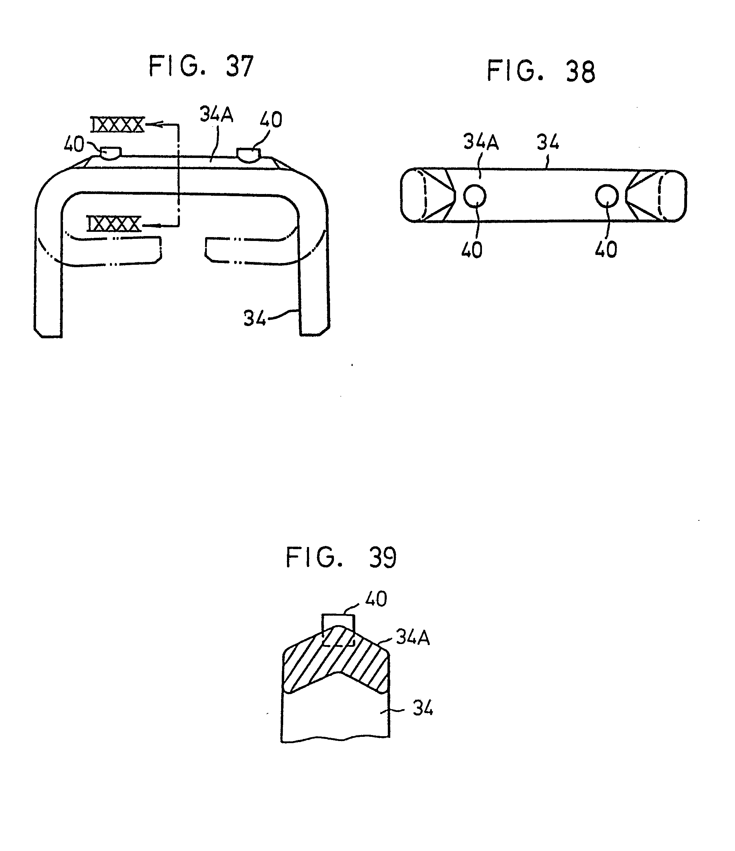

Figs. 37 to 41 respectively show the fourteenth to sixteenth preferred embodiments of the invention but illustrate the configuration of the metal member 134 which has not yet been attached to the body 112. As in the case of the thirteenth embodiment, any of the metal members 134 in these embodiments includes the ground contact side 134A having a sectional shape with high flexural rigidity. The resultant function and effect are the same as those of the metal member 134 used in the thirteenth embodiment.

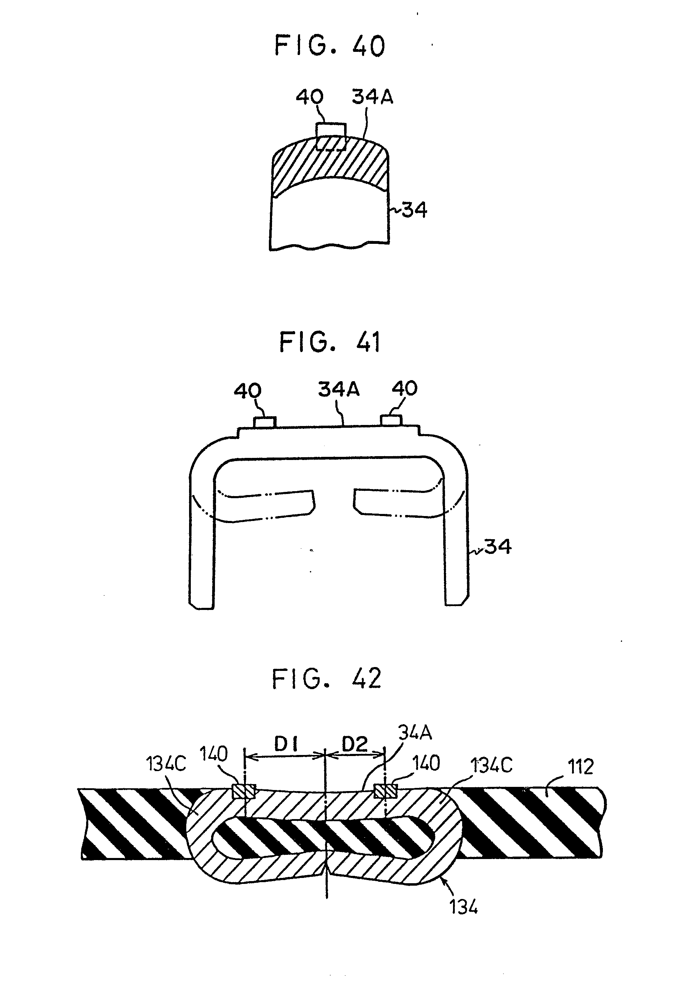

The metal member 134 used in the fourteenth embodiment shown in Figs. 37 to 39 is bent in a C-like shape in section. The metal member 134 used in the fifteenth embodiment shown in Fig. 40 is bent in an arcuated manner in section. The metal member 134 used in the sixteenth embodiment shown in Fig. 41 has the thin-walled ground contact side 134A.

The high flexural rigidity of the ground contact side 134A is feasible by adopting various shapes other than those of the aforesaid respective embodiments.

The metal member 134 used in the seventeenth embodiment will be described below with reference to Figs. 15 and 42.

Since the skid preventing device used in this embodiment is described previously in detail in the fourth embodiment, the description is omitted, and portions relative to the metal member 134 are explained below.

The skid preventing device 110 has the metal members 134 which are caulked in an elliptic shape. The paired contact chips 140 are secured to each of the metal members 134 by soldering. As shown in Fig. 42, the respective contact chips 140 are located such that distances D1 and D2 from the longitudinal center of the metal member 134 differ from each other. When the metal member 134 is attached to the body 112, the resultant shoulders 134C bent from the ground contact side 134A become greater in thickness than the remaining portion of the member 134.

As shown in Fig. 15, such metal members 134 are arranged side by side in the direction of the circumference of a tire such that the respective longitudinal centers of the members 134 are located on the substantial center line in the direction of the breadth of the tire. The adjacent metal members 134 are arranged in such a manner that the longitudinal orientations thereof are 180° reverse to each other about their respective longitudinal centers. Accordingly, the adjacent contact chips 140 along the circumference of the tire are shifted from each other in the direction of the breadth of the tire.

The skid preventing device 10 in this embodiment has the chips 140 which, as a whole, are disposed in columns of four in the direction of the breadth of the tire, so that the capability of preventing skidding is improved. Also, a single kind of the metal member 134 having the chips 140 has only to be prepared and the metal members 134 can be disposed at the same positions in the direction of the breadth of the tire. Accordingly, it is possible to minimize an increase in the production costs and other expenses.

In addition, since the shoulders 134C of the metal member 134 are increased in thickness, the durability is improved.

It is to be noted that this seventeenth embodiment is applicable to the skid preventing device 10 having the rubber-made body 112 with the shape shown in Figs. 16 and 17.

The contact chip 140 used in the invention may be made of a heat-treated metal, a ceramic, a refractory metal ($H_{RA}$ 86 - 89), a thermet or any other wear-resistant material.

As is evident from the foregoing description, the skid preventing device having the aforesaid construction needs the reinforcement cord which is buried in or covered with rubber during production as disclosed in Japanese Patent Laid-open No. 84212/1986. Since it is necessary to stretch the reinforcement cord over a heated mold during the production, the work is time-consuming and this may result in

-38-

defects in quality; for example, coating rubber could stick to the reinforcement cords due to heat. Also, the work of manually stretching the reinforcement cord forms a cause of imperfect quality such as the cords being decentered or exposed from the rubber coating. In addition, since it is necessary to stretch a plurality of reinforcement cords over the mold, the work is time-consuming. Although an external force partially acts upon a product in use, the force is not supported by all the reinforcement cords. Thus, the product is weak in tensile strength.

Accordingly, in order to achieve a method of producing a skid preventing device of the type in which the reinforcement cords are exactly and easily buried and its tensile strength can be increased, it is recommended to carry out the following process.

More specifically, a plurality of pins are disposed upright and at predetermined intervals, and a first layer of rubber is press-fitted onto the pins. A reinforcement cord is wrapped around the portions of the pins which protrude from the first layer. In addition, a second layer of rubber is press-fitted onto the pins so as to sandwich the reinforcement cord therebetween. In this state, apertures are stamped out and thus a rubber sheet is formed. The rubber sheet is incorporated into a mold in which it is vulcanized.

In this preferred process, since the reinforcement cord is wrapped around the pins protruding from the first layer of rubber at the steps of forming the rubber sheet before vulcanization, it is unnecessary to perform the work of wrapping the reinforcement cord above a heated mold. Therefore, the cord is exactly and easily wrapped around the pins. Also, since such wrapping is enabled irrespective of the use of the vulcanizing mold, the automatic wrapping of the reinforcement cord can be achieved. Moreover, since a single continuous cord is used as the reinforcement cord, the wrapping work is simplified. In a case where an external force partially acts upon the reinforcement cord in use, the external force acts upon the remaining portion of the continuous cord, and accordingly, it is possible to bear a large external force.

The pins around which the reinforcement cords should be wrapped are projected from the base of a pin mold. If a perforated pallet is inserted in the pins on the base before the first rubber layer is press-fitted onto the pins and the perforated pallet is removed from the pin mold after the rubber sheet has been formed, it is possible to easily remove the rubber sheet from the pin mold.

A suitable method of producing a skid preventing device will be described below with reference to Figs. 16, 17 and 43. Incidentally, detailed descriptions are omitted with respect to the arrangement and functions explained previously in the fifth embodiment; for example, those of the body 112, the outside frame portion 14, the fittings 120, 122, the metal members 134 or the like.

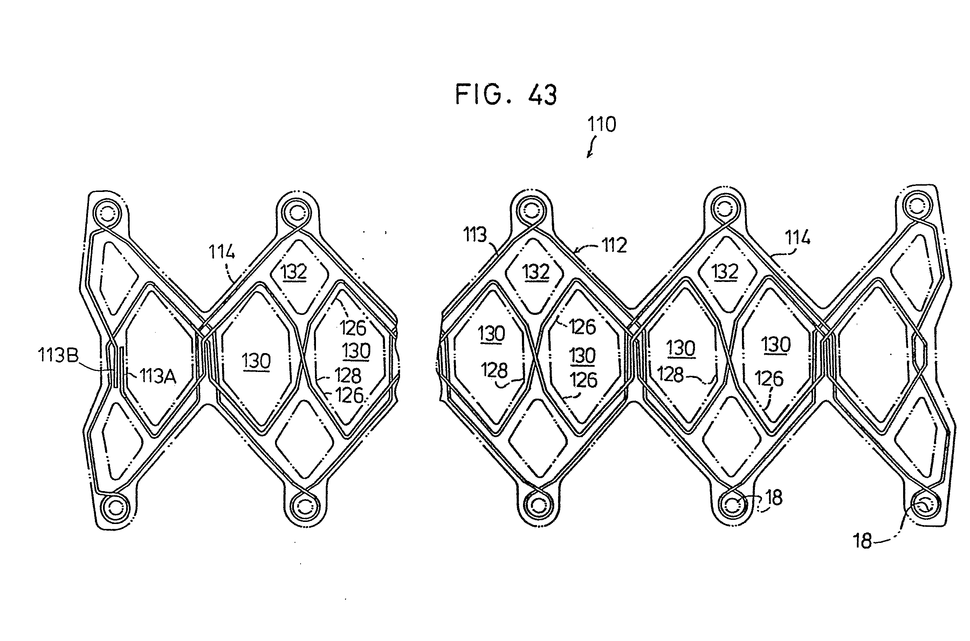

Referring to Fig. 43, the reinforcement material 113 has a continuous and integral shape, and is continuously passed in the outside frame portion 114 and the small frame portions 126 and 128. In this arrangement show in Fig. 43, the reinforcement material 113 starts with one end 113A, advanced in a manner approximate to a sine curve, and alternately passed around the mounting holes 118 formed on the breadthwise sides of the body 112. Subsequently, the material 113 is again guided in a manner approximate to a sine curve, passed through the small frame portions 126 and 128, and terminating with the other end 113B.

AS shown in Fig. 43, the reinforcement material 113 is passed in a buried manner through all of the outside frame portions 114 and the small frame portions 126 and 128 of the body 112. More specifically, the reinforcement material 113 is a single integral product which is buried in the body 112, Thus, the material 113 is not formed by connecting separate pieces in the body 122, and is stretched around as if it were drawn with a single stroke of a brush.

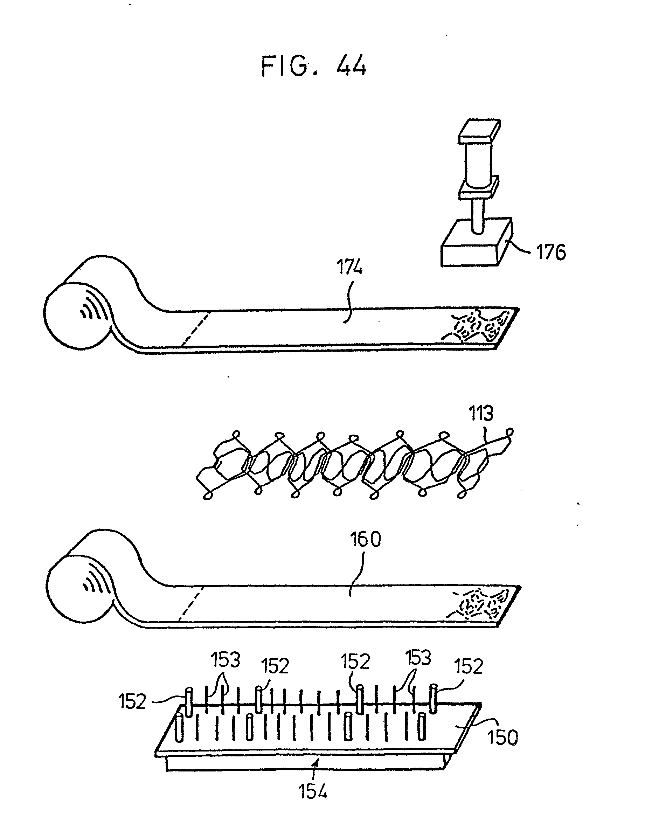

The procedures for producing the skid preventing device 110 constituting one embodiment of the invention will be described below with reference to Fig. 44.

-41-

First, a pin mold 154 is prepared by disposing a plurality of pins 152 and 153 upright on a base 150. The respective pins 152 correspond to the mounting holes 118 shown in Fig. 16 while the respective pins 153 correspond to the bends of the reinforcement material 113 shown in Fig. 43. Specifically, each of the pins 152 has an outer diameter equivalent to the inner diameter of the mounting hole 118. However, since the pins 153 are only used as means around which the reinforcement material is temporarily wrapped during a molding process, the pins 153 are much smaller in diameter than the pins 152 in order to preclude the perforation formed in the skid preventing device 110 by the pins 153 from remaining therein after vulcanizing molding.

Secondly, a first rubber layer 160 is fitted onto the pins 152 and 153 in such a manner that the respective end portions of the pins 152 and 153 project from the layer 160.

Thirdly, the reinforcement 113 is wrapped around the respective pins 152 and 153 by means of a reinforcement-material braiding machine (not shown).

The wrapped pattern of the reinforcement material 113 is not limited to that shown in Fig. 43, and it is possible to employ any pattern that allows for the continuous wrapping of the reinforcement material 113 around the pins 152 and 153 within a single body 112. Also, the reinforcement material 113 is disposed such that certain intermediate portions thereof pass through some portions of the body 112 two or three times.

After the wrapping of the reinforcement material 113 has been completed, a second rubber layer 174 is laid over the projecting pins 152 and 153, then pressed toward the pin mold 154.

In consequence, the pins 152 and 153 project from the second rubber layer 174, and an unvulcanized rubber sheet is obtained. The small apertures 130 and 132 shown in Fig. 43 are punched out in the unvulcanized rubber sheet by means of a punching cutter 176. The punching cutter 176 may have a construction which can punch out the small apertures 130 and 132 at the same time.

The shape punched by the punching cutter 176 is removed, and the thus-obtained rubber sheet is accommodated in a vulcanizing mold (not shown). Although not shown in the drawings, the vulcanizing mold has a recess which is in advance formed so as to accommodate the rubber sheet.

The vulcanizing mold is attached to a vulcanizing machine, and predetermined temperature and pressure are applied to the mold, thereby obtaining the skid preventing device 110.

Subsequently, the metal members 134 shown in Fig. 18, for example, are attached to the skid preventing device as occasion demands.

It is to be noted that, when annular grooves for mounting the metal member 134 are to be formed in the periphery of the body 112, projections corresponding to the grooves are preferably formed in the recess of the vulcanizing mold.

As described above, since the reinforcement material 113 is wrapped around the pins 152 and 153 at a given location separate from the vulcanizing mold, performance of positive work is enabled at a place which is not affected by high-temperature atmosphere in the vulcanizing mold. If a braiding machine is used in wrapping the reinforcement material 113, automatic wrapping of the reinforcement material 113 is enabled and thus further positive work is achieved.

Accordingly, the rubber coated on the reinforcement material 113 does not burn due to the heat of the vulcanizing mold, nor is the reinforcement material 113 exposed from the body 112 after molding.

In use, the reinforcement material 113 which is continuously buried in the body 112 serves to positively support tension applied thereto. Specifically, since the reinforcement material 113 is continuously buried, external force acting upon a portion of the body 112 is widely distributed over the reinforcement material 113, so that the external force is positively supported.

**WHAT IS CLAIMED IS:**

1.  A device for preventing tire skidding, including a multiplicity of frame portions which are continuously formed in a net-like shape, characterized in that said respective frame portions are integrally connected by thin-walled portions, said frame portions constituting in combination the body of said device which acts to prevent tire skidding.

2.  A device for preventing tire skidding according to Claim 1, wherein each of said frame portion has an outside frame portion with a net-like shape formed by a combination of small frame portions, a multiplicity of said frame portions being continuously formed in correspondence with the circumference of a tire.

3.  A device for preventing tire skidding according to Claim 1, wherein each of said thin-walled portions has a uniform thickness which is less than the thickness of said frame portion.

4.  A device for preventing tire skidding according to Claim 1, wherein each of said thin-walled portions has a slope along which its thickness progressively varies.

5.  A device for preventing tire skidding according to Claim 1, wherein each of said thin-walled portions is formed such that a surface thereof which is adjacent to a tire is integral and flush with a surface of said frame portion which is adjacent to said tire.

# FIG. 1

0248387

FIG. 2

FIG. 3

4/20

FIG. 4

28B
28
20(20A)
12
16
28A
32
33
30

FIG. 5

20
16
33
33

FIG. 6

20A
40
22A
20D
24A
46
22A
24A
42
20D
22
24
44
22
20B
42
24
20C
42
10
42

## FIG. 7

46A

46A  46

44

46B

## FIG. 8

20A  20A  B

40

A  32  40A

## FIG. 9

20A  34

40

20D

34

24  36

22A

22B

24

22

20D

24

22

34

20B

24

20C

10

6/20

# FIG. 10

( A )

60 54 56 58

( B )

54 56 C 60 58

( C )

60 58

( D )

58 60 56

FIG. 11

FIG. 12

FIG. 14

0248387

FIG. 13

FIG. 15

FIG. 16

FIG. 17

FIG. 18

FIG. 22

FIG. 19

FIG. 23

FIG. 20

FIG. 24

FIG. 25

FIG. 21

FIG. 26

FIG. 27

FIG. 28

FIG. 29

FIG. 30

FIG. 31

FIG. 34

FIG. 32

FIG. 35

FIG. 33

FIG. 36

FIG. 37

FIG. 38

FIG. 39

FIG. 40

FIG. 41

FIG. 42

# FIG. 43

110

113 112 114 113B 113A 132 130 126 128 126

18 18 18/20

Q248387

FIG. 44

PRIOR ART
FIG. 45

PRIOR ART
FIG. 46